# EUROPEAN PATENT APPLICATION

(11) **EP 4 431 328 A1**
(43) Date of publication of application: **18.09.2024**
(21) Application number: 22910507.7
(22) Date of filing: 29.09.2022
(51) Int. Cl.: B60K 13/02, B62D 35/00, F02M 35/10

(54) **INTAKE DUCT**

(30) Priority: 23.12.2021 JP 2021209809
(71) Applicant: Daimler Truck AG, 70771 Leinfelden-Echterdingen (DE)
(72) Inventor: SAKAI, Naoto, Kawasaki-shi, Kanagawa 211-8522 (JP); YOSHINO, Hironori, Kawasaki-shi, Kanagawa 211-8522 (JP)
(74) Representative: Hofstetter, Schurack & Partner
(86) International application number: PCT/JP2022/036426
(87) International publication number: WO 2023/119781

(57) **Abstract**

An intake duct includes an air intake unit that sucks external air and a duct unit that supplies air sucked by the air intake unit to a supply target. The air intake unit is provided on a roof part of a vehicle. The intake duct includes a water guide (51) provided on a side face (31e) of the air intake unit and configured to guide adhering water from a front side to a rear side of the vehicle. The side face (31e) is located on an inside in a vehicle width direction of the vehicle.

## Description

### [Technical Field]

The present invention is related to an intake duct that feeds air to a power source and/or a device relating to the power source in a vehicle.

### [Background Art]

For example, a vehicle such as a truck sometimes incudes, on a roof of a cab, an intake duct that feeds air to a power source, e.g., an internal combustion engine, and/or a device relating to the power source.

By being provided at a high position from the ground as described above, the intake duct can be suppressed from sucking dust or the like near the ground, and can take cleaner air therein.

In addition, for example, when a heat source such as an engine is provided below the cab, the intake duct can be less susceptible to the heat source.

For example, Patent Document 1 discloses an invention related to a vehicle in which an air intake unit of an intake duct is disposed on a roof of a cab. This invention focuses on a problem that, when the roof of the cab is provided with a wind guide plate which includes a retractable shape portion that upwardly bypasses the air intake unit, rainwater intensively flows down from the foremost end of the retractable shape portion formed in a forwardly descending shape to block a door space of the cab, so that an occupant getting on or off the cab has a risk of getting wet. In this invention, notches are formed at a front portion of the retractable shape portion to form edges that help the rainwater flow down at immediately after the notches, aiming to suppress the rainwater from intensively flowing down.

### [Citation List]

### [Patent Documents]

[Patent Document 1] Japanese Laid-Open Patent Publication No. 2018-165063

### [Summary of Invention]

### [Technical Problem]

Incidentally, as also described in Patent Document 1, the intake duct sometimes locates at a roof part above a boarding door due to relationship of layout. In such a case, when it is raining, for example, there is a risk that the rainwater poured over the intake duct or the roof flows to the vicinity of the boarding door space via a side face on an inside in a vehicle width direction of the intake duct, and consequently splashes over the occupant who is getting on or off the cab, making the clothes, etc. of the occupant wet.

Although Patent Document 1 suppresses the rainwater from intensively flowing down to the vicinity of the boarding door space by providing the retractable shape portion at the wind guide plate on the roof of the cab, it has been desired to suppress the rainwater from intensively flowing down to the vicinity of the boarding door space without depending on the wind guide plate.

The present invention has been devised in view of such problems, and an object thereof is to provide an intake duct that is capable of suppressing water such as rainwater from flowing down from the side face of the intake duct to the vicinity of the boarding door.

### [Solution to Problem]

The present disclosure has been made to solve at least a part of the above problems, and can be realized as the following aspects or application examples.
(1) An intake duct according to the present application example includes an air intake unit that sucks external air and a duct unit that supplies air sucked by the air intake unit to a supply target. The air intake unit is provided on a roof part of a vehicle. The intake duct includes a water guide provided on a side face of the air intake unit and configured to guide adhering water from a front side to a rear side of the vehicle. The side face is located on an inside in a vehicle width direction of the vehicle.
   According to such the intake duct, by the water guide provided on the side face on the inside in the vehicle width direction of the air intake unit of the intake duct, water such as rainwater adhering to the side face is guided from the front side to the rear side of the vehicle. Therefore, when the water poured over the roof part flows to the side of the roof part to adhere to the side face of the air intake unit, the water is guided to the rear side of the vehicle, and then, flows down from the rear side of the air intake unit. This can let the water flow down on the rear side of the boarding door provided below a front portion of the air intake unit, which can suppress the water from flowing down to the vicinity of the boarding door.
(2) Preferably, the air intake unit is disposed in a recess dented at a portion of the roof part of the vehicle.
   Accordingly, since the water flowed into the recess adheres to the side face of the air intake unit to be guided to the rear side of the vehicle and then flows down from the rear side of the air intake unit, it is possible to let the water flow on the rear side of the boarding door provided below the front portion of the air intake unit. In addition, since the air intake unit is disposed in the recess, air resistance caused by the air intake unit can be reduced when the vehicle is running.
(3) Preferably, the air intake unit is disposed on a rear side edge of the roof part of the vehicle.
   This can let the water flow down behind the vicinity of the boarding door, suppressing the water from flowing down to the vicinity of the boarding door.
(4) Preferably, the water guide includes a plurality of grooves provided on the side face of the air intake unit and each formed so as to downwardly extend from the front side to the rear side of the vehicle.
   Accordingly, the water adhering to the side face of the air intake unit is guided from the front side to the rear side of the vehicle when flowing down along the plurality of grooves.
(5) Preferably, the grooves include a step that faces vertically upward.
   This helps guiding of the water from the front side to the rear side of the vehicle along the grooves.
(6) Preferably, the grooves are each formed in a straight line that downwardly extends from the front side to the rear side of the vehicle.
   This helps guiding of the water from the front side to the rear side of the vehicle when the water flows down along the grooves.
(7) Preferably, the water guide includes a plurality of embossed portions provided on the side face of the air intake unit and arranged in a form of a dashed line that downwardly extends from the front side to the rear side of the vehicle.
   Accordingly, the water adhering to the side face of the air intake unit is guided along the plurality of embossed portions from the front side to the rear side of the vehicle when flowing down.
(8) Preferably, a plurality of rows of embossed portions are laterally arranged, and each of the rows is formed by the plurality of embossed portions.
   Accordingly, in a wide range of the side face of the air intake unit, the adhering water is guided along the plurality of rows of embossed portions from the front side to the rear side of the vehicle.
(9) Preferably, the rows of embossed portions are each formed in a straight line that downwardly extends from the front side to the rear side of the vehicle.
   This helps guiding of the water along the rows of embossed portions from the front side to the rear side of the vehicle when the water adhering to the side face of the air intake unit flows down.
(10) Preferably, the plurality of grooves are arranged in parallel with each other, and one or more of the rows of embossed portions are formed between the adjacent grooves and in parallel with the grooves.

Accordingly, the water adhering to the side face of the air intake unit is guided along the plurality of grooves and the rows of embossed portions from the front side to the rear side of the vehicle when flowing down.

### [Advantageous Effects of Invention]

According to the present disclosure, due to the water guide provided on the side face of the air intake unit, it is possible to suppress water such as rainwater poured over the roof part or the like from flowing down to the vicinity of the boarding door space.

### [Brief Description of the Drawings]

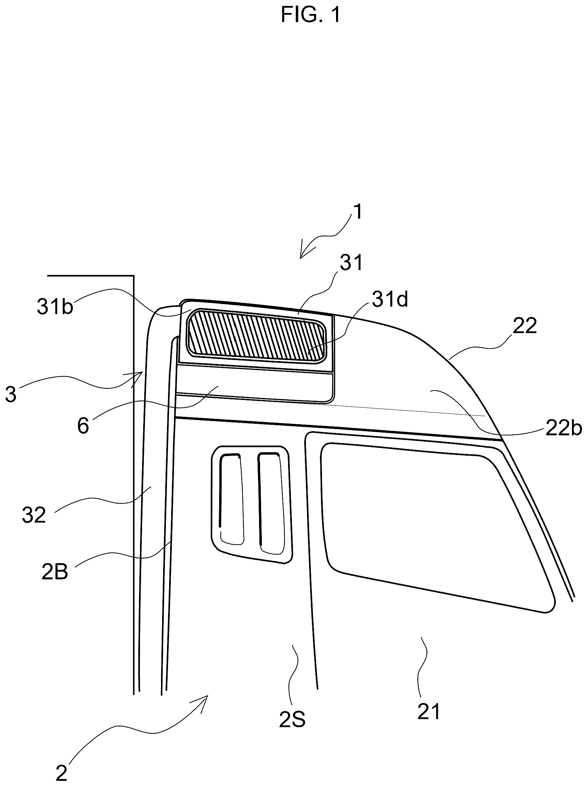

FIG. 1 is a side view of an intake duct arranged side (vehicle right side) of an upper portion of a cab including a roof part of a vehicle according to one embodiment.

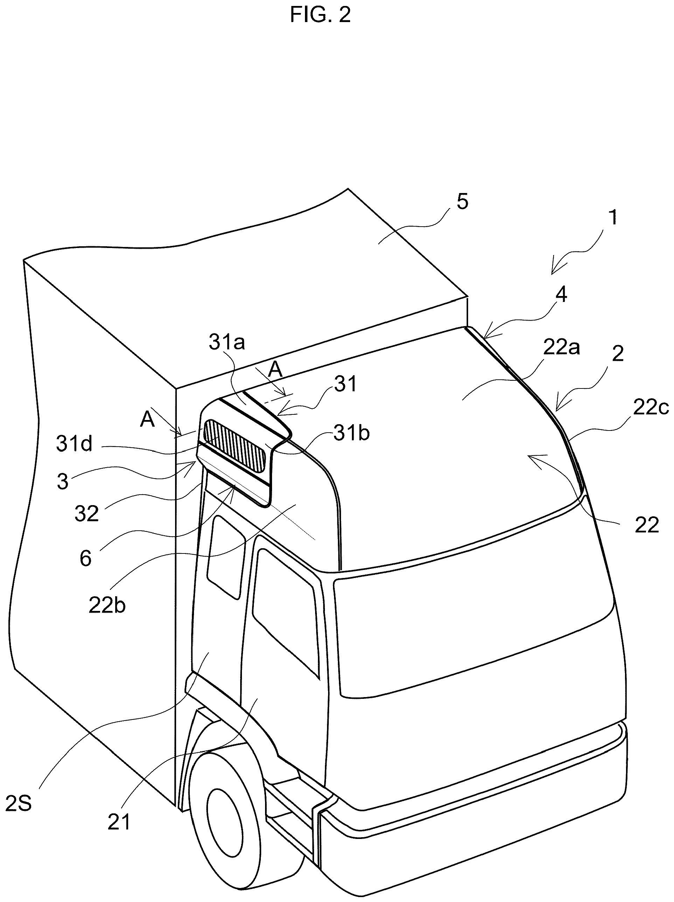

FIG. 2 is a perspective view of the cab of the vehicle according to the one embodiment when seen from an upper front side and the intake duct arranged side (vehicle right side).

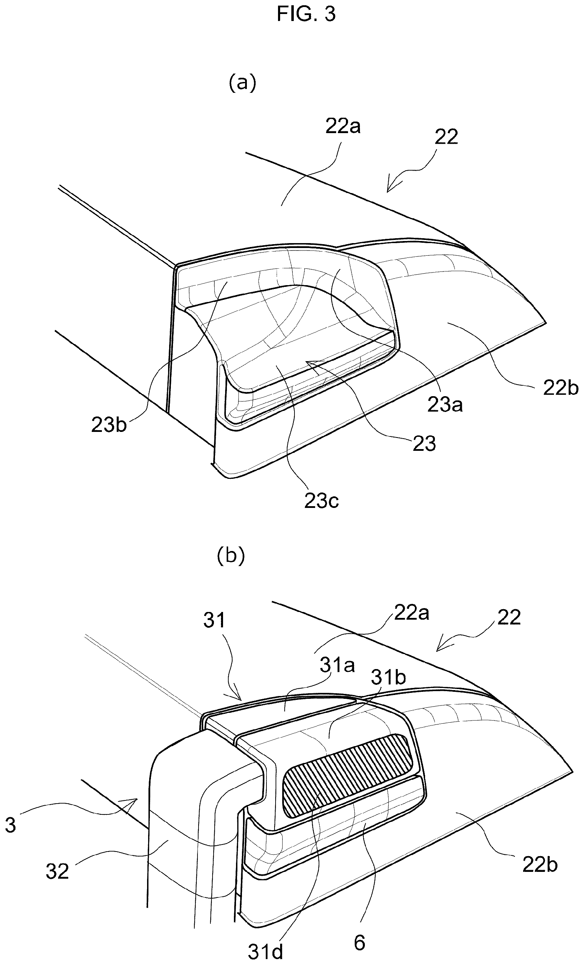

FIG. 3 is a main part perspective view of the roof part of the vehicle according to the one embodiment when seen from an upper rear side and the intake duct arranged side (vehicle right side), of which (a) illustrates a state in which the intake duct is removed and (b) illustrates a state in which the intake duct is mounted.

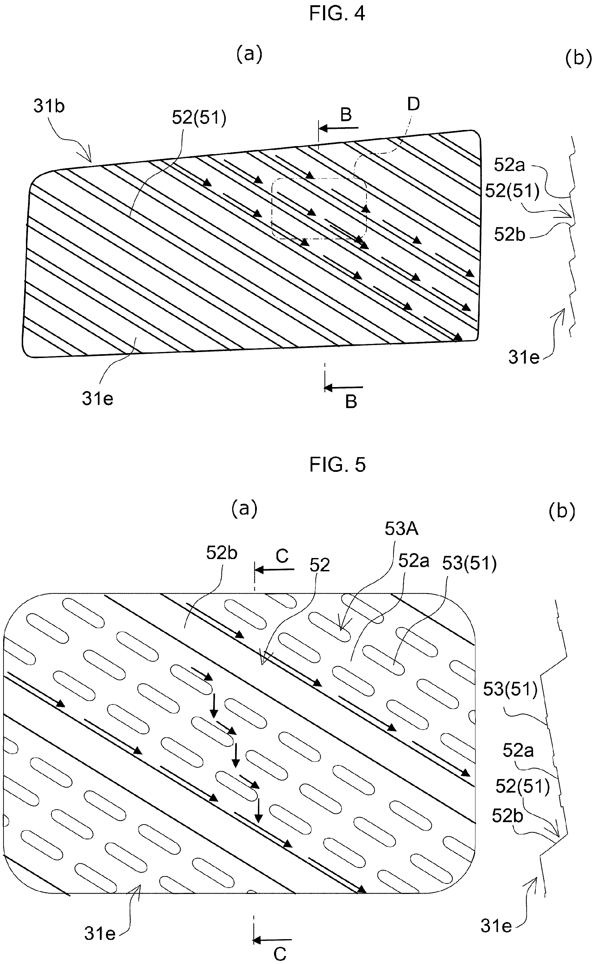

FIG. 4 is a schematic view illustrating a surface structure of a side face on an inside in a vehicle width direction of an air intake unit of the intake duct according to the one embodiment, of which (a) is a front view of the surface and (b) is a cross-sectional view (B-B arrow sectional view of FIG. 4(a)) of the surface.
FIG. 5 is a schematic view illustrating the surface structure of the side face on the inside in the vehicle width direction of the air intake unit of the intake duct according to the one embodiment, of which (a) is an enlarged view of the surface (an enlarged view of D part of FIG. 4(a)) and (b) is a cross-sectional view of the surface (C-C arrow sectional view of FIG. 5(a)).

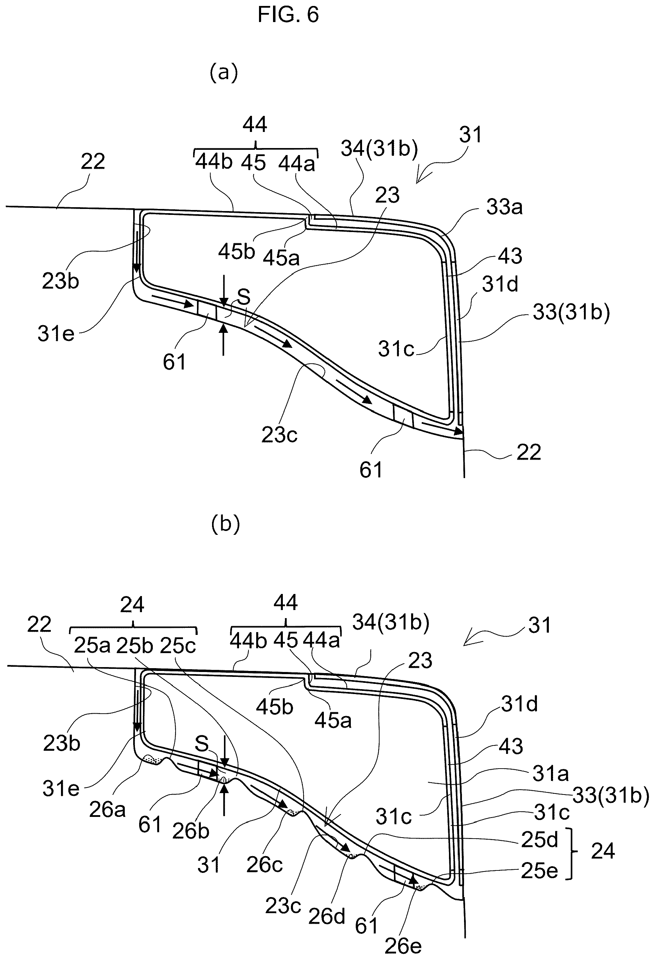

FIG. 6 is a cross-sectional view (A-A arrow sectional view of FIG. 2) of a main part (on the intake duct arranged side) of the roof part of the vehicle according to the one embodiment, of which (a) illustrates a comparative example without a water guide in the recess of the roof and (b) illustrates the present embodiment including a water guide in the recess of the roof.

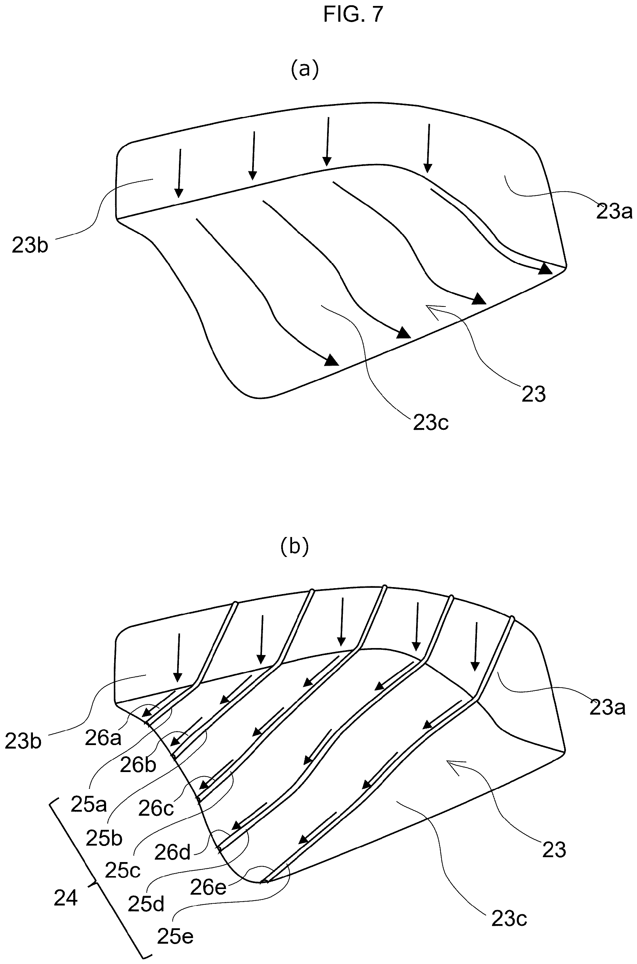

FIG. 7 is a perspective view of the recess in the roof part of the vehicle according to the one embodiment when seen from an upper rear side, of which (a) illustrates a comparative example without the water guide in the recess of the roof and (b) illustrates the present embodiment including the water guide in the recess of the roof.

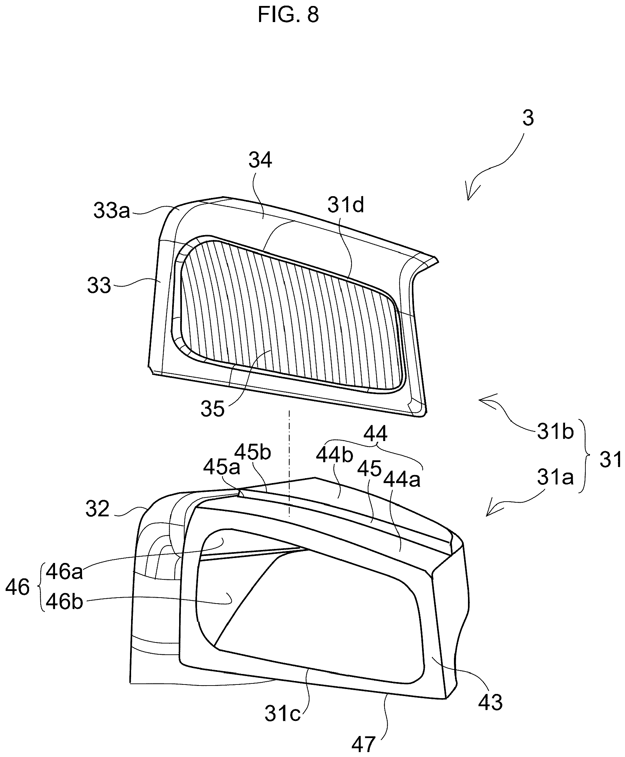

FIG. 8 is an exploded perspective view of the air intake unit in the intake duct according to the one embodiment.

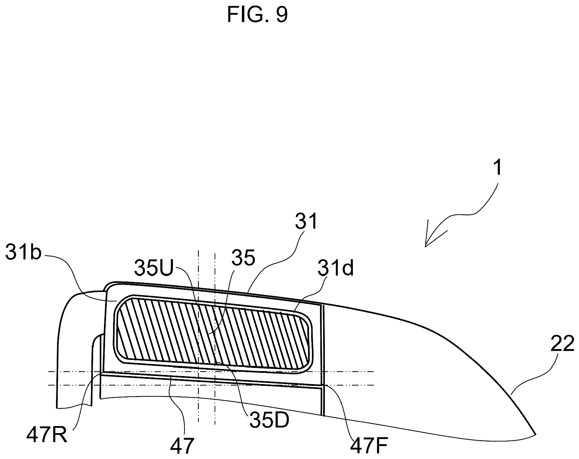

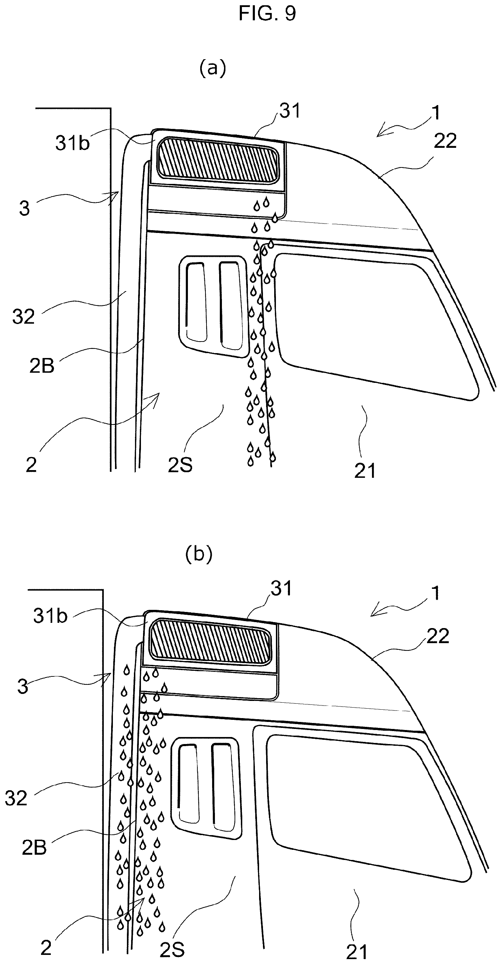

FIG. 9 is an explanatory view of the air intake unit in the intake duct according to the one embodiment when seen from a side.
FIG. 10 is a side view of the intake duct arranged side (vehicle right side) of the upper portion of the cab of the vehicle illustrating effects according to the one embodiment, of which (a) illustrates the case of a comparative example and (b) illustrates the case of the present embodiment.

### [Description of Embodiments]

An embodiment of the present disclosure will now be described with reference to drawings. The embodiment is merely illustrative and is not intended to preclude the application of various modifications and techniques not explicitly set forth in the following embodiment. Each configuration of the present embodiment can be implemented by various modifications without departing from the gist thereof. Also, it can be selected as necessary, or can be combined as appropriate.

### --1. Apparatus Configuration--

The present embodiment describes a truck as an example of a vehicle.

In the following description, a forward direction of the vehicle is referred to as a front side, the opposite direction thereof (a rearward direction of the vehicle) is referred to as a rear side, and left and right are defined with reference to a state in which the vehicle faces the front side. Further, a front-rear direction is also referred to as a vehicle length direction, and a left-right direction is also referred to as a vehicle width direction. Furthermore, the direction perpendicular to both the vehicle length direction and the vehicle width direction is referred to as an up-down direction. The vehicle is assumed to be on a horizontal road and in a posture that the up-down direction coincides with the vertical direction (the downward direction coincides with the acting direction of gravity). In this posture, the vertically upward direction is referred to as a height direction.

### --1-1. Cab--

As depicted in FIGS. 1 and 2, a vehicle 1 is of a so-called cab-over type, which includes a cab 2 provided at a front portion of the vehicle 1 and a non-illustrated engine mounted below the cab 2. The vehicle 1 of the present embodiment is a right-handed vehicle and is provided with a non-illustrated driver's seat on the right side within the cab 2. Left and right side faces (hereinafter, also referred to as cab side faces) 2S of the cab 2 are each provided with a door 21 for getting on and off. FIGS. 1 and 2 each illustrate the side face 2S and the door 21 on the right side only.

In a so-called high roof vehicle, a roof part 22 at an upper face of the cab 2 is higher than a general roof (hereinafter, also referred to as "normal roof"), but as compared to this, the vehicle 1 is formed as a high roof vehicle with even higher roof part 22 (hereinafter, such a vehicle is referred to as super high roof vehicle). The super high roof vehicle can secure a high vehicle interior space inside the cab 2, which elevates habitability of the vehicle interior space, so that when a driver or the like rests temporarily in the vehicle interior during long distance travel in a large-sized truck, etc., the comfortableness can be enhanced.

The roof part 22 includes: a central panel 22a constituting a front portion of the roof and a roof top; a side panel 22b constituting a right portion of the roof; and a side panel 22c constituting a left portion of the roof, and the side panels 22b and 22c are welded to a right edge and a left edge of the central panel 22a, respectively. Non-illustrated frames are provided inside the roof part 22 to support the roof part 22.

In a truck with a normal roof, since a cargo box is higher than the roof part, the portion higher than the roof part at a front face of the cargo box is subjected to the oncoming wind to cause increased air resistance. In view of this, a drag foiler (air deflector) has been attached to the upper portion of the cab to reduce the air resistance and consequently to suppress deterioration of fuel efficiency. On the other hand, in a super high roof vehicle, the roof part is raised to the height substantially the same as the height of a mounted device such as a cargo box (a van, etc.) in the cab, so that the air resistance can be reduced by utilizing the roof part.

### --1-2. Intake Duct and Roof Structure--

The vehicle 1 as described above includes, on the upper side of the roof part 22, an intake duct 3 that feeds air to an engine (internal combustion engine) serving as a power source. The intake duct 3 includes an air intake unit (hereinafter, also referred to as a snorkel) 31 installed in the roof part 22 of the cab 2, and a duct unit 32 disposed along a rear face 2B of the cab 2.

The snorkel 31 is an intake port for taking in air from the atmosphere, is hollow-shaped, and includes: a head (hereinafter, also referred to as a snorkel body) 31a that includes an opening 31c (see FIGS. 6 (a),(b) and 8) communicating with the duct unit 32 and facing the side of the vehicle 1; and a cover (hereinafter, also referred to as a snorkel cover) 31b attached so as to cover the snorkel body 31a and forming a part of an outer face of the roof part 22.

The snorkel body 31a is formed of a resin box in the present embodiment, and is provided with the opening 31c formed on a face (right side face) that faces the side of the vehicle 1.

The snorkel cover 31b is a cover member made of a resin panel whose cross-section is formed in an L-shape in the present embodiment, and is provided with a side face cover 33 (see FIGS. 6(a) ,(b) and 8) attached to the right side face of the snorkel body 31a and an upper face cover 34 attached to at least a part of an upper face of the snorkel body 31a. In the present embodiment, the side face cover 33 and the upper face cover 34 (see FIGS. 6(a),(b) and 8) are integrally formed as one cover member (snorkel cover 31b).

The side face cover 33 is provided with a louver 31d that corresponds to the opening (reference symbol 31c in FIGS. 6 (a),(b) and 8) of the snorkel body 31a. The louver 31d includes multiple slats 35, takes in air from gaps between adjacent slats 35, and suppresses intrusion of water such as rainwater (rainwater, snow, etc.) by the slats 35. The air is taken into the snorkel 31 through the louver 31d and the opening 31c.

Inside the snorkel body 31a on the inside in the vehicle width direction of the snorkel cover 31b, provided is a non-illustrated separator (partition plate) that separates rainwater, etc.

The separator is of a general type with multiple plate-like members. After passing through the louver 31d and opening 31c, the rainwater, etc. hits the plate-like members to be guided so as to drip on a bottom face of the snorkel body 31a, and thereby, is separated from the intake air.

On a bottom face on a vehicle front side of the snorkel body 31a, provided is a non-illustrated drain that discharges the separated rainwater, etc. The drain is provided with a non-illustrated valve that opens and closes with intake pulsation of the non-illustrated engine. Thus, for example, when the vehicle is stationary, the valve closes to suppress the discharge from the drain, and when the vehicle is running, the valve opens due to the intake air of the engine to discharge the rainwater, etc. from the drain.

The duct unit 32 is a portion that serves as an air passage between the snorkel 31 and the engine, and is formed in a cylindrical shape that extends downward from a rear end of the snorkel 31 in the present embodiment. The inside of the snorkel 31 and the inside of the duct unit 32 are communicating with each other, and the air taken in by the snorkel 31 is supplied to an intake portion of the engine through the duct unit 32.

The snorkel 31 is disposed on the top of the roof in a vehicle with a normal roof, but the vehicle 1 according to the present embodiment, which is a super high roof vehicle, is provided with a recess 23 (see FIG. 3(a)) dented at a portion of the roof part 22 of the cab 2, and the snorkel body 31a is disposed in the recess 23. Since the snorkel 31 is disposed on the right rear portion of the cab 2, in response to this, the recess 23 is formed at the right (driver's side) rear portion of the roof part 22.

FIGS. 3(a) and (b) are main part perspective views of the roof part 22 of the vehicle 1 when seen from the upper rear side and the intake duct arranged side (vehicle right side), in which thick lines illustrate contour lines and edge-shaped bent portions bending at some steep angles, and thin lines illustrate explanatory lines for explaining curved shapes. FIG. 3(a) illustrates a state in which the intake duct is removed, whereas FIG. 3(b) illustrates a state in which the intake duct is mounted.

As depicted in FIG. 3(a), in the present embodiment, the recess 23 is formed at the rear portion of the side panel 22b on the right side of the roof part 22 so as to be dented downward from a roof surface of the roof part 22.

The recess 23 includes: a side face 23a on the vehicle front side; a side face 23b on the vehicle center side; and a bottom face 23c, and is formed such that smooth curved faces respectively connect the side face 23a to the side face 23b, the side face 23a to the bottom face 23c, and the side face 23b to the bottom face 23c. The bottom face 23c is formed to be inclined downward to the right, which means descending toward the outside in the vehicle width direction, and also downward to the front, which means descending toward the front side in the vehicle front-rear direction.

In the present embodiment, as depicted in FIGS. 3(a), 6(a) and (b), the bottom face 23c has: a portion on the vehicle center side formed in a curved shape slightly protruding upward; and a portion on the cab side face 2S side formed in a curved shape slightly protruding downward, and is in a curved shape formed by these curved faces smoothly connected to each other. However, the shape of the bottom face 23c is an example, and the bottom face 23c only needs to incline downward to the cab side face 2S side.

The snorkel 31 of the intake duct 3 is, as depicted in FIG. 3(b), received in the recess 23, and as depicted in FIGS. 6(a) and (b), fixed to the bottom face 23c via a mounting member(s) 61 at one or more points. From a viewpoint of suppressing the amount of dynamic displacement of the snorkel 31 and/or minimizing the clearance between the roof part 22 and the snorkel 31, the mounting members 61 are preferably provided at two or more points.

In the present embodiment, as depicted in FIG. 3(b), the outer face of the snorkel 31 is formed in a curved shape that smoothly continues with the curved face of the roof part 22. Below the opening 31c of the snorkel 31, in order to form a vehicle outer face in a curved shape bending in a desired shape, fixed is a curved plate 6.

Further detail configuration of the snorkel 31 will be described later.

A gap S (see FIG. 6(a)) is provided between the bottom face 23c of the recess 23 and the snorkel 31, and as indicated by arrows in FIGS. 6(a) and 7(a), the rainwater, etc. dropped on the roof part 22 enters the gap S from the side faces 23a and 23b, and then, flows on the bottom face 23c downwardly to the cab side face 2S.

Incidentally, as described above, the rainwater, etc. which flowed down along the bottom face 23c of the recess 23 further falls along the cab side face 2S, but as depicted in FIG. 1, front portions of the recess 23 and the snorkel 31 are located above the rear portion of the door 21. Thus, when an occupant such as a driver gets on or off through the door space after opening the door 21, the rainwater, etc. dripping from the front portion of the bottom face 23c of the recess 23 might splash onto the occupant, causing the occupant and/or the clothes or the like of the occupant to be wet.

In addition, since the snorkel 31 is formed to slightly descend to the front side and the bottom face 23c of the recess 23 is also formed to descend to the front side, as depicted by patterns of raindrops in FIG. 10(a), for example, the rainwater, etc. intensively drops from the vicinity of the front end of the recess 23 to the vicinity of the rear portion of the door 21, causing the occupant and/or the clothes etc. of the occupant to be more intensively wet.

### --1-3. Water Guide of Intake Duct--

The present intake duct 3 includes, as depicted in FIGS. 4 (a),(b) and 5 (a),(b), in the snorkel body (head) 31a of the snorkel (air intake unit) 31, a water guide 51 that is provided on a side face 31e (see FIG. 6) located on the inside in the vehicle width direction of the vehicle, and that guides adhering rainwater, etc. from the front side to the rear side of the vehicle. Although FIGS. 4 and 5 each illustrate the side face 31e that extends in the vertical direction, the side face 31e according to the present embodiment is in a curved shape that has a portion inclined toward a side edge of the roof part 22 below, and the actual shape of the water guide 51 of the side face 31e is different from the illustration.

In the present embodiment, the water guide 51 includes, on the side face 31e, a plurality of grooves 52 formed so as to downwardly and obliquely extend from the front side to the rear side of the vehicle 1, and a plurality of embossed portions 53 arranged in a form of a dashed line so as to downwardly and obliquely extend from the front side to the rear side of the vehicle 1.

Assuming that the side face 31e extends in the vertical direction, as depicted in FIG. 4(b), the grooves 52 are each formed by a face 52a whose vertical cross-section obliquely faces vertically down and a face 52b whose vertical cross-section obliquely faces vertically up, and the faces 52b each function as a step. The plurality of grooves 52 are formed in parallel with each other at equal intervals. The vertical cross-section of the plurality of grooves 52 is formed in a zigzag (serrated shape).

The embossed portions 53 slightly protrude from the surface of the side face 31e, and in the present embodiment, are each formed in an oval shape in a front view. The embossed portions 53 are arranged at equal intervals in the form of a dashed line along the longitudinal direction of the ovals to form rows. Such rows 53A of the embossed portions 53 are arranged between the steps 52b (i.e., within the faces 52a) of the plurality of grooves 52 and in parallel with the plurality of grooves 52. In the present embodiment, a plurality of (e.g., three) rows 53A of embossed portions 53 are arranged between the steps 52b (within the faces 52a).

The rainwater, etc. adhering to the surface of the side face 31e adheres to the surface of the side face 31e by the surface tension of moisture, and then, flows down along the grooves 52 and the embossed portions 53 on the surface of the side face 31e by gravity to the rear side of the vehicle 1 as depicted by arrows in FIGS. 4(a) and 5(a). Although FIGS. 4(a) and 5(a) each illustrate the arrows focusing on part of the grooves 52 and embossed portions 53, the rainwater, etc. exhibits similar or substantially similar behavior in each of the grooves 52 and embossed portions 53. As such, the rainwater, etc. adhering to the side face 31e by the surface tension flows down to the rear side of the vehicle 1 along the grooves 52 and the embossed portions 53 while adhering to the side face 31e even if the surface of the side face 31e faces vertically down.

### --1-4. Water Guide of Roof Part--

The present roof structure includes a water guide 24 that is provided in the recess 23 and that guides the rainwater from the front side to the rear side of the vehicle.

The water guide 24 has a function of a weir that prevents the rainwater, etc. from flowing down simply to the vehicle side (left-right direction), and that guides the rainwater to flow down to the vehicle side while flowing to the vehicle rear side. In the present embodiment, as depicted by arrows in FIGS. 6(b) and 7(b), as the water guide 24, equipped are a plurality of linear protrusions 25a to 25e each in a bead shape and each projecting to an inner space of the recess 23 (the space for accommodating the snorkel body 31a). Here, the linear protrusions 25a to 25e are formed by processing a metal plate of the side faces 23a, 23b and the bottom face 23c in convex shapes toward the inner space by press molding or the like.

The plurality of linear protrusions 25a to 25e are oriented toward the vehicle rear side and the vehicle side so as to be continuous from the side faces 23a, 23b to the bottom face 23c, and are arranged in parallel with each other at substantially equal intervals. As depicted in FIG. 6(b), on the upper side of the respective linear protrusions 25a to 25e, formed are grooves 26a to 26e each extending toward the vehicle rear side and the vehicle side, which causes the rainwater, etc. to flow down along insides of the grooves 26a to 26e to the rear side and the side. Although the bottom face 23c of the recess 23 slants to the front side when viewed from the side, as depicted in the cross-sectional view of FIG. 6(b), the bottom face 23c greatly slants to the vehicle side, which enables the grooves 26a to 26e to direct toward the vehicle rear and the vehicle side.

### --1-5. Detailed Configuration of Snorkel--

Hereinafter, the configuration of the snorkel (air intake unit) 31 will be described in detail with reference to FIGS. 4(a),(b), 8, and 9. First, description will be made in relation to the shapes of the snorkel cover (cover) 31b and the snorkel body (head) 31a. Thereafter, an inclined structure of the snorkel 31 will be described.

The snorkel cover 31b consists of the side face cover 33 and the upper face cover 34, and is formed to have the cross-section in an L-shape as described above.

The side face cover 33 is formed by a planar region which covers the entire right side face 43 of the snorkel body 31a. The upper face cover 34 is continuously provided with respect to an upper edge 33a of the side face cover 33. The upper face cover 34 extends from the upper edge 33a of the side face cover 33 to the inside in the vehicle width direction.

The upper face cover 34 is formed by a planar region which covers a portion of the upper face of the snorkel body 31a.

The portion of an upper face 44, which is covered by the upper face cover 34, is specifically a first region 44a on the right side face 43 side in the upper face 44 of the snorkel body 31a. Being disposed in an orientation that intersects the face of the side face cover 33, the upper face cover 34 functions, not only as a cover member, but also as a structure that ensures strength of the upper edge 33a side of the side face cover 33.

An outer face of a corner where the side face cover 33 and the upper face cover 34 are butted in the snorkel cover 31b is formed in a curved shape smoothly continuous with a curved face that forms a corner where the central panel 22a and the side panel 22b are butted in the roof part 22 of the cab 2.

The side face cover 33 is provided with the louver 31d which includes the multiple slats 35. The slats 35 are plates that each extend along the height direction, and are arranged in parallel and adjacent to each other in the front-rear direction of the vehicle. An upper end of the louver 31d is disposed near the upper edge 33a of the side face cover 33 to secure a large dimension in the up-down direction of the louver 31d.

In order to mount the upper face cover 34 in the snorkel cover 31b whose cross-section is in an L-shape, the snorkel body 31a is provided with a step portion 45 on the upper face 44 thereof.

Specifically, the upper face 44 of the snorkel body 31a is imaginarily divided into: the first region 44a on the side of the vehicle and to which the upper face cover 34 of the snorkel cover 31b is mounted; and a second region 44b other than the first region 44a, and the step portion 45 is provided between the first region 44a and the second region 44b.

On the right side face 43 of the snorkel body 31a, provided is the opening 31c that faces the side of the vehicle. The opening 31c is a hole that communicates the inside and the outside of the snorkel body 31a with each other, and is covered by the side face cover 33 from the side of the vehicle.

As described above, the non-illustrated separator (partition plate) is provided inside the snorkel body 31a.

The step portion 45 stands from an edge 45a on the side opposite to the side of the vehicle in the first region 44a, and is connected to the second region 44b via its upper edge 45b. The upper face 44 of the snorkel body 31a, to which the step portion 45 is provided, is in a stepped shape in which the second region 44b is provided higher than the first region 44a.

As an example, the dimension in the up-down direction of the step portion 45 is set so as to stand from the first region 44a by the thickness of the upper face cover 34 (snorkel cover 31b).

Next, the inclined structure of the snorkel 31 will be described.

The inclined structure of the snorkel 31 includes an inclined posture of the bottom face 47 of the snorkel body 31a and an inclined posture of the slats 35. Two-dot chain lines in FIG. 9 illustrate each of horizontal auxiliary lines and vertical auxiliary lines.

As depicted in FIG. 9, the snorkel body 31a is disposed in the inclined posture that downwardly inclines to the front (descends to the right in FIG. 9), that is, descends to the front side in the vehicle front-rear direction. Therefore, the bottom face 47 of the snorkel body 31a forms an inclined face in which a front portion 47F positions lower than a rear portion 47R in the vehicle.

Further, each of the slats 35 in the louver 31d is disposed in the inclined posture in which lower portions 35D thereof position in front of the upper portions 35U thereof in the vehicle.

The angle at which the bottom face 47 inclines with respect to the horizontal direction and/or the angle at which slats 35 incline with respect to the vertical direction may be appropriately set in view of both dischargeability (moisture separability) of the moisture that has entered the snorkel 31 and air intake performance of the snorkel 31.

As depicted in FIGS. 1 to 3 (FIGS.3(a),(b)), the duct unit 32 of the present embodiment is connected to an upper portion of the rear side face of the snorkel body 31a.

Further, as depicted in FIG. 8, a connecting port 46a to the duct unit 32 is formed through the upper portion of the rear side face 46 in the snorkel body 31a. The inside of the snorkel body 31a and the duct unit 32 communicate with each other through the connecting port 46a. A region lower than the connecting port 46a in the rear side face 46 forms an upright wall 46b. Since the connecting port 46a is provided (narrowed) at an upper side, a large dimension in the up-down direction can be secured in the upright wall 46b. The upright wall 46b suppresses moisture that has entered the snorkel body 31a from being taken into the duct unit 32.

### --2. Actions and Effects--

Since the vehicle according to the present embodiment is configured as described above, the following actions and effects can be obtained.

### --2-1. Actions and Effects by Water Guides of Intake Duct and Roof Part--

During rainfall or the like, among the rainwater, etc. that has fallen onto the roof part 22, part of the rainwater, etc. that has entered the recess 23 adheres to the side face 31e on the inside in the vehicle width direction of the snorkel body 31a of the snorkel 31. The rainwater, etc. adhering to the side face 31e flows down to the rear side of the vehicle 1 (the right side in FIGS. 4(a) and 5(a)) by gravity or the like as depicted by the arrows in FIGS. 4(a) and 5(a), with the support from the water guide 51 (grooves 52 and embossed portions 53) provided on the surface of the side face 31e. As such, even if the surface of the side face 31e faces vertically down, the rainwater, etc. adhering to the side face 31e by the surface tension flows down to the rear side of the vehicle 1 along the grooves 52 and the embossed portions 53 while adhering to the side face 31e. Most of the rainwater, etc. adhering to the side face 31e in this manner eventually fall on the rear side of the rear portion of the door 21 as depicted by the patterns of raindrops in FIG. 10(b).

It should be noted that, when the vehicle is stationary, the valve provided in the drain closes, so that unless a large amount of rainwater, etc. enters the snorkel body 31a, the rainwater, etc. does not leak from the snorkel body 31a to the roof part 22. Therefore, the rainwater, etc. is prevented or suppressed from dropping, as depicted in FIG. 10(a), from the vicinity of the front portion of the snorkel 31 (i.e., the vicinity of the front end of the recess 23) to the vicinity of the rear side of the door 21.

As a result, the occupant and/or the clothes or the like of the occupant can be prevented or suppressed from getting wet by the rainwater, etc. dripping from the recess 23.

Further, during rainfall or the like, among the rainwater, etc. that has fallen onto the roof part 22, the rainwater, etc. that has entered the recess 23 is guided by the water guide 24 (linear protrusions 25a to 25e), and as depicted by the arrows in FIGS. 6(b) and 7(b), flows down from the front side of the vehicle to the rear side and the side of the vehicle. Due to this, as depicted by the patterns of raindrops in FIG. 10(b), most of the rainwater, etc. that has entered the recess 23 eventually fall on the rear side of the rear portion of the door 21.

As a result, the occupant and/or the clothes or the like of the occupant can be prevented or suppressed from getting wet by the rainwater, etc. dripping from the recess 23.

### --2-2. Actions and Effects of Cover and Louver of Intake Duct--

According to the intake duct 3 of the present embodiment, the snorkel cover (cover) 31b consists of the side face cover 33 and the upper face cover 34, and the cross-section thereof is formed in an L-shape. Since the upper face cover 34 is disposed in the orientation that intersects the face of the side face cover 33, the upper face cover 34 functions as a rib structure that ensures the strength of the upper edge 33a side of the side face cover 33. Therefore, a reinforcing portion for the louver 31d is not necessary on the upper edge 33a side of the side face cover 33, and the dimension of the louver 31d in the vertical direction can be enlarged to the upper side of the side face cover 33. In consequence, as compared with the conventional technique that needs a reinforcing portion for securing the strength of the louver, the area of the louver 31d can be widened. Therefore, the intake amount of air can be secured. This contributes to, for example, enhancement of fuel efficiency of the engine.

If the reinforcing portion is necessary, the snorkel 31 needs to be larger to secure the area of the louver 31d, so that the configuration with the intake duct 3 disposed in the recess 23 of the roof part 22 as in the present embodiment would need to enlarge the recess 23 so as to accommodate a large snorkel 31, or to extend the snorkel 31 to the outside farther than the roof part 22 instead of enlarging the recess 23.

In contrast, in the case of the present intake duct 3, since the reinforcing portion is not necessary, the required area of the louver 31d can be ensured without enlarging the intake duct, which eliminates the need to enlarge the recess 23 or to extend the snorkel 31 to the outside farther than the roof part 22.

By not enlarging the recess 23, it is possible to suppress the volume reduction in the cab to be caused by forming the recess 23 and to secure the volume in the cab. Further, by not extending the snorkel 31 to the outside farther than the roof part 22, it is possible to suppress an increase in the air resistance.

Furthermore, for example, if a reinforcing portion such as a reinforcing rib is provided so as to extend to the outside from the outer face of the snorkel 31, the air resistance increases due to the reinforcing portion, but in the present intake duct 3, since the reinforcing portion is not required, it is possible to suppress the increase in the air resistance to be caused by such a reinforcing portion.

In order to mount the upper face cover 34 of the snorkel cover 31b whose cross-section is in an L-shape, the step portion 45 which stands from the first region 44a is provided on the upper face 44 of the snorkel body 31a. Thus, the upper face 44 of the snorkel body 31a forms a stepped shape in which the second region 44b is provided higher than the first region 44a. Accordingly, in a state where the snorkel cover 31b is mounted on the snorkel body 31a and the upper face cover 34 is disposed to overlap the first region 44a, the outer face of the upper face cover 34 and the outer face of the other region 44b in the upper face 44 form a smoothly continuous shape without a step. Therefore, it is possible to suppress the air resistance to be caused by the outer face shape of the snorkel 31. This contributes to aerodynamic improvement in the intake duct 3 in which the snorkel 31 is provided on the roof part 22.

In addition, since the step portion 45 provided on the upper face 44 of the snorkel body 31a is disposed in the orientation that intersects the upper face 44, the step portion 45 functions also as the rib structure that ensures the strength of the upper face 44. Therefore, the strength of the snorkel body 31a can be enhanced.

Moreover, in the snorkel cover 31b of the present embodiment, the outer surface of the corner at which the side face cover 33 is butted with the upper face cover 34 is substantially flush with the surface of the portion where the central panel 22a is butted with the side panel 22b in the roof part 22 of the cab 2. This suppresses the air resistance to be caused by the outer surface shape of the snorkel cover 31b, which contributes to aerodynamic improvement.

In the snorkel cover 31b, since the corner continuous with the upper face cover 34 of the upper edge 33a of the side face cover 33 is in a curved shape equivalent to that of the corner of the side panel 22b of the roof part 22, the oncoming wind can pass smoothly, and thereby, the air resistance is suppressed.

Since the intake duct 3 of the present embodiment can improve the aerodynamics as described above, it contributes to enhancing fuel efficiency of the engine.

Further, according to the intake duct 3 of the present embodiment, the bottom face 47 of the snorkel body 31a forms the inclined face in which the front portion 47F locates lower than the rear portion 47R in the vehicle, and in each of the slats 35 of the louver 31d is arranged in the inclined posture that the lower portion 35D locates in front of the upper portion 35U in the vehicle. Due to this, the moisture that has entered the inside of the snorkel body 31a and/or the moisture adhering to the slats 35 come to be separated from the air by the separator provided in the snorkel body 31a while flowing to the front side of the vehicle. Therefore, the water separability in the snorkel body 31a can be enhanced, and also, the water dischargeability during running of the vehicle can also be enhanced.

According to the intake duct 3 of the present embodiment, since the connecting port 46a of the duct unit 32 is provided on the upper side of the rear side face 46, it is possible to secure a large dimension in the up-down direction of the upright wall 46b below the connecting port 46a at the rear side face 46. The upright wall 46b suppresses the moisture that has entered the snorkel body 31a from being taken into the duct unit 32. Thus, the water separability in the snorkel body 31a can be enhanced.

In the intake duct 3 that enhances the water separability by discharging water to the front side of the vehicle as described above, the moisture is less likely to enter the duct unit 32 connected on the upper side of the rear side face 46 in the snorkel body 31a. As a result, for example, it is possible to reduce a risk of deteriorating fuel efficiency due to high ventilation resistance caused by a wet air cleaner filter, and/or a damaging risk due to water intrusion into the engine.

### --3. Miscellaneous--

The above embodiment illustrates the water guide 51 of the intake duct 3, which includes both the grooves 52 and the embossed portions 53, but the water guide 51 may include only one of them.

The above embodiment illustrates a configuration in which the water guide 51 (the grooves 52, the embossed portions 53) is provided on the entire region or almost entire region of the side face 31e of the snorkel cover 31b, but the water guide 51 may be partially provided on a portion (preferably, the most efficient portion) of the side face 31e.

The shapes and numbers of the grooves 52 and the embossed portions 53 are not limited to those of the above embodiment.

The above embodiment illustrates the water guide 51 of the intake duct 3 provided in the recess 23 of the roof part 22, but the water guide 51 of the intake duct 3 may alternatively be applied to, for example, an intake duct 3 provided on a normal, i.e., not high, roof part. Even with this configuration, the same effect can be obtained.

In the above embodiment, the water guide 24 of the roof part 22 is configured by the multiple (five) linear protrusions 25a to 25e, but the number of linear protrusions is not limited. Only one groove may suffice as long as the depth thereof is secured. However, since the depth of the groove is also limited when linear protrusions are provided in the restricted gap S, the rainwater, etc. can be more reliably guided from the front side to the rear side of the vehicle by multiple grooves formed by multiple linear protrusions 25a to 25e.

In the above embodiment, the water guide 24 is formed by the linear protrusions 25a to 25e each in a bead shape that projects to the inner space of the recess 23, but the water guide 24 would suffice as long as it guides the rainwater, etc. from the front side to the rear side of the vehicle, and may be formed by one or more grooves denting with respect to the inner space of the recess 23 and extending to the rear side and the side of the vehicle.

The above embodiment illustrates the configuration in which the upper face cover 34 of the snorkel cover 31b covers the first region 44a of the upper face 44 (a portion of the upper face 44) as an example, but alternatively, the upper face cover 34 may cover the entire upper face 44 of the snorkel body 31a. In this case also, the same actions and effects as those of the above embodiment can be obtained.

If the upper face cover 34 is configured to cover the entire upper face 44 of the snorkel body 31a, the lower face of the upper face cover 34 may be provided with a stepped portion that matches the step portion 45 of the upper face 44 of the snorkel body 31a.

The intake duct 3 described above illustrates the configuration in which the entire snorkel body 31a descends to the front side as an example, but when at least the bottom face 47 of the snorkel body 31a descends to the front side, the effect of enhancing the water separability described above can be obtained.

The intake duct 3 may be configured to include only one of the inclined posture of the snorkel body 31a (bottom face 47) described above and the inclined posture of the slats 35.

Although the intake duct 3 of the present embodiment is provided on the right side of the roof part 22 of the vehicle 1, the intake duct 3 may be provided on the left side of the roof part 22 of the vehicle 1.

The above embodiment assumes that the intake duct 3 feeds air to the engine (internal combustion engine) which serves as a power source, but the intake duct is not limited thereto. The intake duct may supply cooling air, for example, to an electric motor serving as a power source of an electric vehicle, a battery unit (a device relating to a power source) of an electric vehicle, or the like.

The above embodiment exemplifies the vehicle in a truck, but the roof structure according to the present disclosure can be applied not only to the truck but also to various vehicles.

### [Reference Signs List]

- 1: vehicle
- 2: cab
- 2S: side face (cab side face) of cab 2
- 21: door
- 22: roof part
- 22a: central panel of roof part 22
- 22b,22c: side panel of roof part 22
- 23: recess
- 23a,23b: side face of recess 23
- 23c: bottom face of recess 23
- 24: water guide
- 25a-25e: linear protrusion
- 26a-26e: groove
- 3: intake duct
- 31: air intake unit (snorkel)
- 31a: head (snorkel body)
- 31b: snorkel cover (cover)
- 31c: opening
- 31d: louver
- 31e: side face on inside in vehicle width direction of snorkel cover 31b
- 32: duct unit
- 33: side face cover
- 33a: upper edge
- 34: upper face cover
- 35: slat
- 35D: lower portion of slat
- 35U: upper portion of slat
- 43: right side face of head 31a
- 44: upper face of head 31a
- 51: water guide
- 52: groove
- 52a: face that configures groove 52
- 52a: face (step) that configures groove 52
- 53: embossed portion
- 53A: row of embossed portions 53
- 6: curved plate
- 61: mounting member
- S: gap

## Claims

1. An intake duct including an air intake unit that sucks external air and a duct unit that supplies air sucked by the air intake unit to a supply target, the air intake unit being provided on a roof part of a vehicle, the intake duct comprising
a water guide provided on a side face of the air intake unit and configured to guide adhering water from a front side to a rear side of the vehicle, the side face being located on an inside in a vehicle width direction of the vehicle.

2. The intake duct according to claim 1, wherein
the air intake unit is disposed in a recess dented at a portion of the roof part of the vehicle.

3. The intake duct according to claim 1 or 2, wherein
the air intake unit is disposed on a rear side edge of the roof part of the vehicle.

4. The intake duct according to any one of claims 1 to 3, wherein
the water guide includes a plurality of grooves provided on the side face of the air intake unit and each formed so as to downwardly extend from the front side to the rear side of the vehicle.

5. The intake duct according to claim 4, wherein
the grooves include a step that faces vertically upward.

6. The intake duct according to claim 4 or 5, wherein
the grooves are each formed in a straight line that downwardly extends from the front side to the rear side of the vehicle.

7. The intake duct according to any one of claims 1 to 6, wherein
the water guide includes a plurality of embossed portions provided on the side face of the air intake unit and arranged in a form of a dashed line that downwardly extends from the front side to the rear side of the vehicle.

8. The intake duct according to claim 7, wherein
a plurality of rows of embossed portions are laterally arranged, each of the rows being formed by the plurality of embossed portions.

9. The intake duct according to claim 8, wherein
the rows of embossed portions are each formed in a straight line that downwardly extends from the front side to the rear side of the vehicle.

10. The intake duct according to claim 8 or 9, wherein
the plurality of grooves are arranged in parallel with each other, and one or more of the rows of embossed portions are formed between the adjacent grooves and in parallel with the grooves.
